# EUROPEAN PATENT APPLICATION

(11) **EP 4 624 501 A1**
(43) Date of publication of application: **01.10.2025**
(21) Application number: 23895011.7
(22) Date of filing: 21.11.2023
(51) Int. Cl.: C08F 210/16

(54) **ETHYLENE ALPHA-OLEFIN COPOLYMER AND METHOD FOR PREPARING SAME**

(30) Priority: 24.11.2022 KR 20220159742
(71) Applicant: LOTTE CHEMICAL CORPORATION, Seoul 05551 (KR)
(72) Inventor: CHAE, Byung Hun, Daejeon 34110 (KR); LEE, Rai Ha, Daejeon 34110 (KR); HONG, Younjin, Daejeon 34110 (KR); HA, Dal Yong, Daejeon 34110 (KR); LEE, Kyung Yong, Daejeon 34110 (KR); MIN, Kyung Dae, Daejeon 34110 (KR)
(74) Representative: Germain Maureau
(86) International application number: PCT/KR2023/018828
(87) International publication number: WO 2024/112084

(57) **Abstract**

According to an embodiment of the present invention, provided is an ethylene alpha-olefin copolymer including an ethylene structural unit and an alpha-olefin structural unit, wherein a stress-strain curve measured by ASTM D638 includes at least two sections in which a slope of a tangent line changes, and the sections in which the slope of the tangent line changes include a first section in which the slope of the tangent line decreases and a second section in which the slope of the tangent line increases.

According to an embodiment of the present invention, an ethylene alpha-olefin copolymer having excellent tensile elongation, impact strength, and flexural strength due to structural characteristics thereof, and having excellent processability, and a method for preparing the same may be provided.

## Description

### TECHNICAL FIELD

The present invention relates to an ethylene-alpha-olefin copolymer and a method for preparing the same.

### BACKGROUND ART

With the recent expansion of the renewable energy market, the solar power market is also growing exponentially, and in particular, olefin materials are widely used as encapsulants for solar panels. Typically, encapsulants may be made from either a single material or a combination of two or more different materials. Currently, the most widely used material for encapsulants is an ethylene vinyl acetate (EVA)-based material applied to attach photovoltaic cells or photovoltaic cell arrays onto ferroelectrics and encapsulate the resulting unit. However, this material exhibits poor adhesion to glass and other module components, leading to easy delamination between module layers upon long-term use, and this, in turn, causes reduced module efficiency and corrosion from moisture penetration.

In addition, EVA-based encapsulants, as currently known, exhibit poor resistance to ultraviolet (UV) light, leading to decolorization or discoloration over long-term use, which also reduces module efficiency. Moreover, the EVA-based encapsulants cause stress upon curing, resulting in module damage.

To address these issues, the use of ethylene alpha-olefin copolymers has recently gained significant attention. Ethylene alpha-olefin copolymer materials serve to protect cells that produce solar energy and provide adhesion to glass and backsheets for protection against moisture and external impacts. To perfectly fulfill these roles, there is a demand for the development of ethylene alpha-olefin copolymers exhibiting superior tensile elongation, impact strength, flexural strength, and processability.

### DISCLOSURE OF THE INVENTION

### TECHNICAL PROBLEM

An aspect of the present invention provides an ethylene alpha-olefin copolymer having excellent tensile elongation, impact strength, flexural strength, and processability, and a method for preparing the same.

### TECHNICAL SOLUTION

According to an aspect of the present invention, there is provided an ethylene alpha-olefin copolymer, wherein a stress-strain curve measured by ASTM D638 includes at least two sections in which a slope of a tangent line changes, and the sections in which the slope of the tangent line changes include a first section in which the slope of the tangent line decreases and a second section in which the slope of the tangent line increases.

The first section may be observed at a strain of 0 to 200%, and the second section may be observed at a strain of 500 to 1000%.

The ethylene alpha-olefin copolymer may have a yield point in the first section.

The ethylene alpha-olefin copolymer may have an elongation of 900% or greater.

The ethylene alpha-olefin copolymer may have a spreading gradient value of 1 to 5 (X 10⁶ Pa/m)

### ADVANTAGEOUS EFFECTS

According to an embodiment of the present invention, an ethylene alpha-olefin copolymer having excellent tensile elongation, impact strength, and flexural strength due to structural characteristics thereof, and having excellent processability and a method for preparing the same may be provided.

### BRIEF DESCRIPTION OF THE DRAWINGS

FIG. 1 is a view showing a graph of the stress-strain curve analysis results for a typical ethylene alpha-olefin copolymer (Comparative Example).
FIG. 2 is a view showing a graph of the stress-strain curve analysis results for an ethylene alpha-olefin copolymer according to an embodiment of the present invention.

### MODE FOR CARRYING OUT THE INVENTION

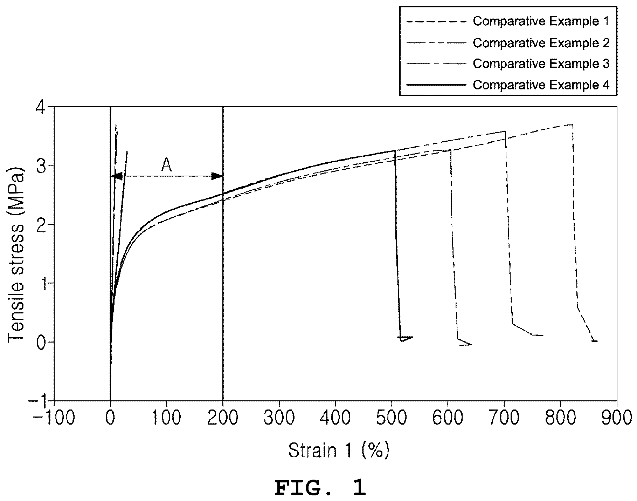

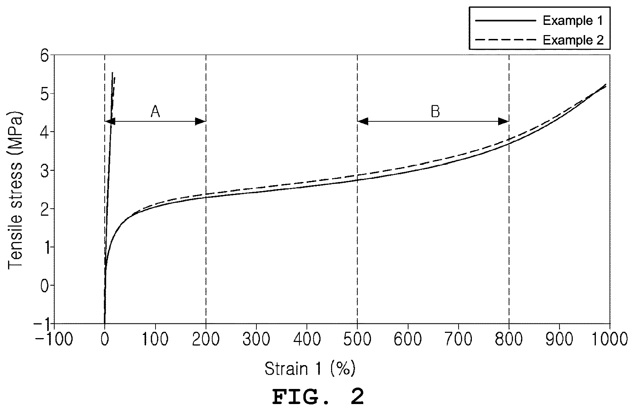

Hereinafter, preferred embodiments of the present invention will be described with reference to FIGS. 1 and 2. The present invention may, however, be embodied in many different forms and should not be construed as being limited to the embodiments set forth herein.

FIG. 1 is a view showing a graph of the stress-strain curve analysis results for a typical ethylene alpha-olefin copolymer (Comparative Example).

FIG. 2 is a view showing a graph of the stress-strain curve analysis results for an ethylene alpha-olefin copolymer according to an embodiment of the present invention.

The term "alkyl" described in the present invention means a monovalent linear or branched saturated hydrocarbon radical consisting solely of carbon and hydrogen atoms, and examples of the alkyl radical include, but are not limited to, methyl, ethyl, propyl, isopropyl, butyl, isobutyl, t-butyl, pentyl, hexyl, octyl, dodecyl, cyclopropyl, cyclobutyl, cyclopentyl, cyclohexyl, cycloheptyl, cyclooctyl, cyclononyl, cyclodecyl, and the like.

In addition, the term "alkenyl" described in the present invention means a linear or branched hydrocarbon radical containing at least one carbon-carbon double bond, and includes, but is not limited to, ethenyl, propenyl, butenyl, pentenyl, and the like.

In addition, the term "alkynyl" described in the present invention means a linear or branched hydrocarbon radical containing at least one carbon-carbon triple bond, and includes, but is not limited to, methynyl, ethynyl, propynyl, butynyl, pentynyl, hexynyl, heptynyl, octynyl, and the like.

In addition, the term "aryl" described in the present invention is an organic radical derived from an aromatic hydrocarbon through the removal of one hydrogen, and includes a single or fused ring system. Specific examples of the aryl include, but are not limited to, phenyl, naphthyl, biphenyl, anthryl, fluorenyl, phenanthryl, triphenylenyl, pyrenyl, perylenyl, chrysenyl, naphthacenyl, fluoranthenyl, and the like.

In addition, the term "alkylaryl" described in the present invention means an organic group in which at least one hydrogen of an aryl group is substituted by an alkyl group, and includes, but is not limited to, methylphenyl, ethylphenyl, n-propylphenyl, isopropylphenyl, n-butylphenyl, isobutylphenyl, t-butylphenyl, and the like.

In addition, the term "arylalkyl" described in the present invention means an organic group in which at least one hydrogen of an alkyl group is substituted by an aryl group, and includes, but is not limited to, phenylpropyl, phenylhexyl, and the like.

In addition, as described in the present invention, the term "amido" means an amino group (-NH₂) bonded to a carbonyl group (C=O), the term "alkylamido" means an organic group in which at least one hydrogen in -NH₂ of the amido group is substituted with an alkyl group, and the term "arylamido" means an organic group in which at least one hydrogen in -NH₂ of the amido group is substituted with an aryl group, and the alkyl group in the alkylamido group and the aryl group in the arylamido group may be the same as, but are not limited to, the examples of the alkyl group and aryl group described above.

In addition, the term "alkylidene" described in the present invention means a divalent aliphatic hydrocarbon group in which two hydrogen atoms are removed from the same carbon atom of an alkyl group, and includes, but is not limited to, ethylidene, propylidene, isopropylidene, butylidene, pentylidene, and the like.

In addition, the term "acetal" described in the present invention means an organic group formed by a bond between alcohol and aldehyde, that is, a substituent having two ether (-OR) bonds on one carbon, and includes, but is not limited to, methoxymethoxy, 1-methoxyethoxy, 1-methoxypropyloxy, 1-methoxybutyloxy, 1-ethoxyethoxy, 1-ethoxypropyloxy, 1-ethoxybutyloxy, 1-(n-butoxy)ethoxy, 1-(iso-butoxy)ethoxy, 1-(sec-butoxy)ethoxy, 1-(tert-butoxy)ethoxy, 1-(cyclohexyloxy)ethoxy, 1-methoxy-1-methylmethoxy, 1-methoxy-1-methylethoxy, and the like.

In addition, the term "ether" described in the present invention is an organic group having at least one ether bond (-O-), and includes, but is not limited to, 2-methoxyethyl, 2-ethoxyethyl, 2-butoxyethyl, 2-phenoxyethyl, 2-(2-methoxyethoxy)ethyl, 3-methoxypropyl, 3-butoxypropyl, 3-phenoxypropyl, 2-methoxy-1-methylethyl, 2-methoxy-2-methylethyl, 2-methoxyethyl, 2-ethoxyethyl, 2-butoxyethyl, 2-phenoxyethyl, and the like.

In addition, the term "silyl" described in the present invention means a -SiH₃ radical derived from silane, and at least one of the hydrogen atoms in the silyl group may be substituted with various organic groups such as alkyl and halogen, and specifically includes, but is not limited to, trimethylsilyl, triethylsilyl, t-butyldimethylsilyl, vinyldimethylsilyl, propyldimethylsilyl, triphenylsilyl, diphenylsilyl, phenylsilyl, trimethoxysilyl, methyldimethoxysilyl, ethyldiethoxysilyl, triethoxysilyl, vinyldimethoxysilyl, triphenoxysilyl, and the like.

In addition, the term "alkoxy" described in the present invention means an -O-alkyl radical, where 'alkyl' is as defined above. Examples of the alkoxy radical include, but are not limited to, methoxy, ethoxy, propoxy, isopropoxy, butoxy, isobutoxy, t-butoxy, and the like.

In addition, the term "halogen" described in the present invention means a fluorine, chlorine, bromine, or iodine atom.

In addition, the term "Cₙ" described in the present invention means n carbon atoms.

Hereinafter, a catalyst for polymerizing an ethylene alpha-olefin copolymer and a method for preparing an ethylene alpha-olefin copolymer will be described.

### <Catalyst for Polymerizing Ethylene Alpha-Olefin Copolymer and Method for Preparing Ethylene Alpha-Olefin Copolymer>

An ethylene alpha-olefin copolymer provided in the present invention may be polymerized under a composition including a catalyst for polymerizing an ethylene alpha-olefin copolymer as described below. Specifically, the catalyst for polymerizing an ethylene alpha-olefin copolymer may include a main catalyst compound represented by Formula 1 below as a transition metal compound having a symmetrical structure, and at least one cocatalyst compound selected from the group consisting of compounds represented by Formula 2 or Formula 3 below.

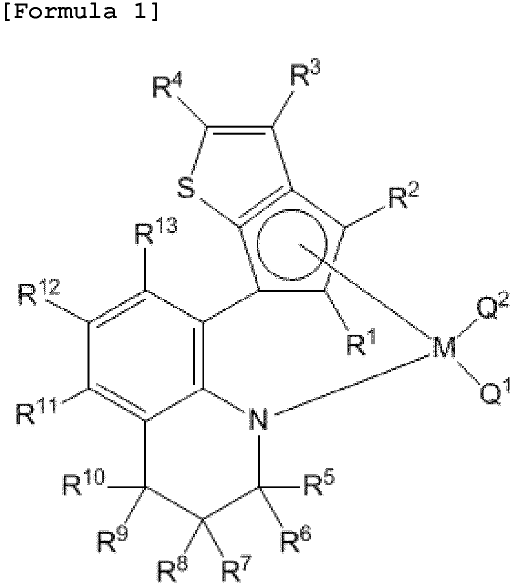

In Formula 1 above,
M is a Group 4 transition metal;
Q¹ and Q² are each independently halogen, (C₁-C₂₀) alkyl, (C₂-C₂₀) alkenyl, (C₂-C₂₀) alkynyl, (C₆-C₂₀) aryl, (C₁-C₂₀) alkyl (C₆-C₂₀) aryl, (C₆-C₂₀) aryl (C₁-C₂₀) alkyl, (C₁-C₂₀) alkylamido, (C₆-C₂₀) arylamido, or (C₁-C₂₀) alkylidene;
R¹, R², R³, R⁴, R⁵, R⁶, R⁷, R⁸, R⁹, and R¹⁰ are each independently hydrogen; (C₁-C₂₀)alkyl with or without an acetal, ketal, or ether group; (C₂-C₂₀)alkenyl with or without an acetal, ketal, or ether group; (C₁-C₂₀) alkyl (C₆-C₂₀) aryl with or without an acetal, ketal, or ether group; (C₆-C₂₀)aryl(C₁-C₂₀) alkyl with or without an acetal, ketal, or ether group; or (C₁-C₂₀) alkylsilyl with or without an acetal, ketal, or ether group, where R¹ and R² may be connected to form a ring, R³ and R⁴ may be connected to form a ring, and at least two of R⁵ to R¹⁰ may be connected to form a ring;
R¹¹, R¹², and R¹³ are each independently hydrogen; (C₁-C₂₀)alkyl with or without an acetal, ketal, or ether group; (C₂-C₂₀) alkenyl with or without an acetal, ketal, or ether group; (C₁-C₂₀) alkyl (C₆-C₂₀) aryl with or without an acetal, ketal, or ether group; (C₆-C₂₀) aryl (C₁-C₂₀) alkyl with or without an acetal, ketal, or ether group; (C₁-C₂₀)alkylsilyl with or without an acetal, ketal or ether group; (C₁-C₂₀) alkoxy; or (C₆-C₂₀) aryloxy, where R¹¹ and R¹² or R¹² and R¹³ may be connected to form a ring.

**[Formula 2]** [L-H]⁺[Z(A)₄]⁻

**[Formula 3]** [L]⁺[Z(A)₄]⁻

In Formulas 2 and 3 above, L is a neutral or cationic Lewis acid, Z is a Group 13 element, A is (C₆-C₂₀)aryl or (C₁-C₂₀) alkyl, and the (C₆-C₂₀) aryl or (C₁-C₂ₒ) alkyl is unsubstituted or substituted with halogen, (C₁-C₂₀)hydrocarbyl, (C₁-C₂₀) alkoxy, or (C₆-C₂₀) aryloxy.

The cocatalyst compound represented by Formulas 2 or 3 above has a strong electrophilicity and thus rapidly dissociates Q¹ and/or Q² bonded to a central metal M of the main catalyst compound represented by Formula 1 above. In this case, faster dissociation of Q¹ and/or Q² induces an increase in polymerization activity, and longer duration of stabilization of the central metal M induces longer coordination of the stabilized M with double bonds included in ethylene and alpha-olefin, which in turn may result in a high molecular weight ethylene-alpha-olefin copolymer.

The transition metal compound represented by Formula 1 includes a new structural ligand in which an amido ligand and ortho-phenylene form a condensed ring, and a pentagonal ring pi-ligand bonded to the ortho-phenylene is fused by a thiophene heterocycle. Accordingly, the transition metal compound has a greater copolymerization activity of ethylene-alpha-olefin than a transition metal compound in which a thiophene hetero ring is not fused.

According to the present invention, in the transition metal compound represented by Formula 1 above, R¹, R², R³, R⁴, R⁵, R⁶, R⁷, R⁸, R⁹, R¹⁰, R¹¹, R¹², and R¹³ may each independently be substituted with a substituent including an acetal, ketal, or ether group, and when substituted with the above-described substituent, it may be more desirable to support the compound on a surface of a carrier.

In addition, in the compound represented by Formula 1 above, preferably, M is titanium (Ti), zirconium (Zr), or hafnium (Hf).

In addition, in the transition metal compound represented by Formula 1 above, preferably, Q¹ and Q² are each independently halogen or (C₁-C₂₀) alkyl, and more preferably, may be chlorine or methyl.

In addition, in the transition metal compound represented by Formula 1 above, R¹, R², R³, R⁴, and R⁵ may each independently be hydrogen or (C₁-C₂ₒ) alkyl, and preferably, may each independently be hydrogen or methyl. More preferably, R¹, R², R³, R⁴, and R⁵ may each independently be hydrogen or methyl, where at least one of R³ or R⁴ may be methyl, and R⁵ may be methyl.

In addition, in the transition metal compound represented by Formula 1 above, preferably, R⁶, R⁷, R⁸, R⁹, R¹⁰, R¹¹, R¹², and R¹³ are each hydrogen.

The transition metal compound represented by Formula 1 above preferably includes the substituents described above to control electronic and steric environment around the metal.

Meanwhile, the transition metal compound represented by Formula 1 above may be obtained from a precursor compound represented by Formula 4 below:

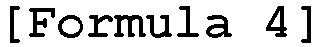

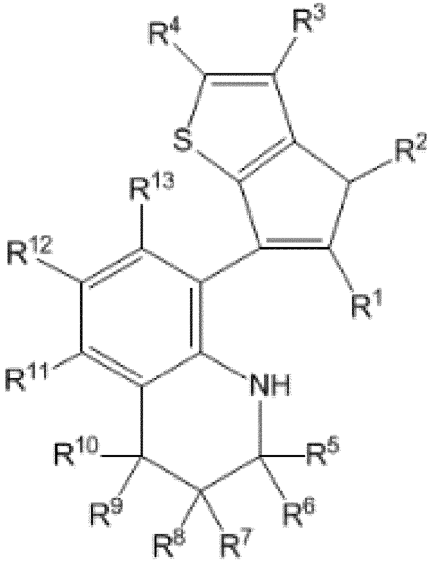

In Formula 4 above, R¹, R², R³, R⁴, R⁵, R⁶, R⁷, R⁸, R⁹, R¹⁰, R¹¹, R¹², and R¹³ are each as defined in Formula 1 above.

In this case, the precursor compound represented by Formula 4 above may be prepared through a method including (i) subjecting a tetrahydroquinoline derivative represented by Formula 5 below to a reaction with alkyl lithium and then adding carbon dioxide to prepare a compound represented by Formula 6, and (ii) subjecting the compound represented by Formula 6 above to a reaction with alkyl lithium, then adding a compound represented by Formula 7 below, and treating the mixture with acid:

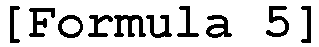

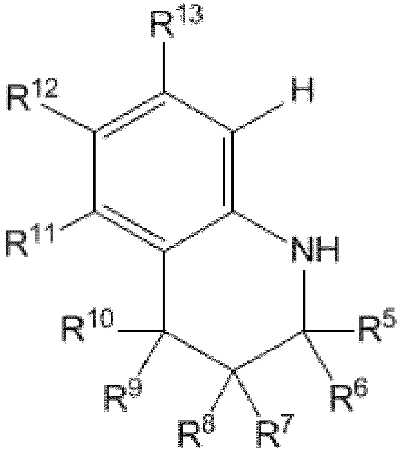

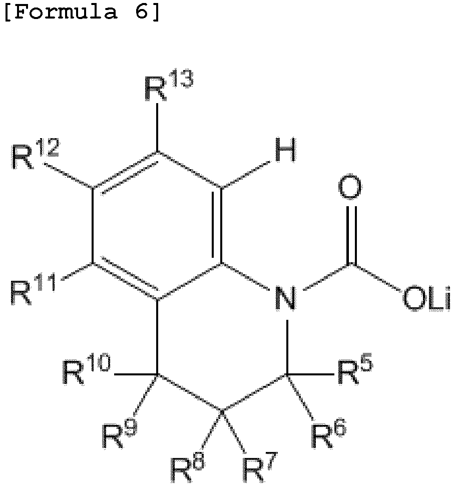

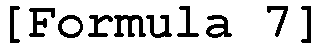

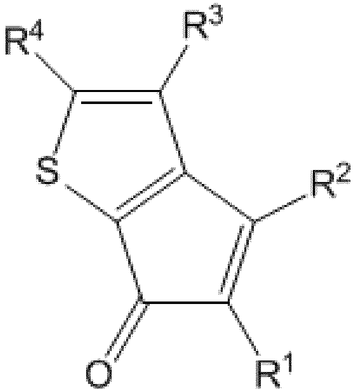

In Formulas 5, 6, and 7 above, R¹, R², R³, R⁴, R⁵, R⁶, R⁷, R⁸, R⁹, R¹⁰, R¹¹, R¹², and R¹³ are each as defined in Formula 1 above.

However, in Formulas 5, 6, and 7 above, R¹, R², R³, R⁴, and R⁵ may each independently be hydrogen or (C₁-C₂ₒ) alkyl, and preferably, may each independently be hydrogen or methyl. More preferably, R¹, R², R³, R⁴, and R⁵ may each independently be hydrogen or methyl, where at least one of R³ or R⁴ may be methyl, and R⁵ may be methyl. In addition, it is preferable that R⁶, R⁷, R⁸, R⁹, R¹⁰, R¹¹, R¹², and R¹³ are each hydrogen. Thereby, accessibility and reactivity of a starting material thereof may be secured, and it is desirable to control electronic and steric environment of the transition metal compound of Formula 1 to be prepared.

Step (i) above is a reaction in which the tetrahydroquinoline derivative represented by Formula 5 above is subjected to a reaction with alkyl lithium and then carbon dioxide is added to convert the mixture into the compound represented by Formula 6 above, which may be performed according to a method described in known literature (Tetrahedron Lett. 1985, 26, 5935; Tetrahedron 1986, 42, 2571; J.Chem.SC.Perkin Trans. 1989, 16.).

In addition, in Step (ii) above, the compound represented by Formula 6 above is subjected to a reaction with alkyl lithium to induce a deprotonation reaction so as to produce an ortho-lithium compound, and the produced ortho-lithium compound is subjected to a reaction with the compound represented by Formula 7 and the resulting product is treated with acid, and thus the transition metal compound precursor represented by Formula 4 above may be obtained.

The reaction of subjecting the compound represented by Formula 6 above to a reaction with alkyl lithium to produce an ortho-lithium compound may be identified through known literature (Organometallics 2007, 27, 6685; Korean Patent Publication No. 2008-0065868), and in the present invention, by subjecting the ortho-lithium compound to a reaction with the compound represented by Formula 7 above and the resulting product is treated with an acid, and thus a transition metal compound precursor represented by Formula 7 above may be obtained.

In this case, the compound represented by Formula 7 above may be prepared through various known methods. Reaction Formula 1 below shows an example thereof, which may be prepared through a single-step reaction, and also allows for easy and economical preparation of the transition metal compound precursor of the present invention by using inexpensive starting materials (J. Organomet. Chem., 2005, 690, 4213).

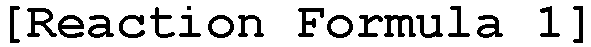

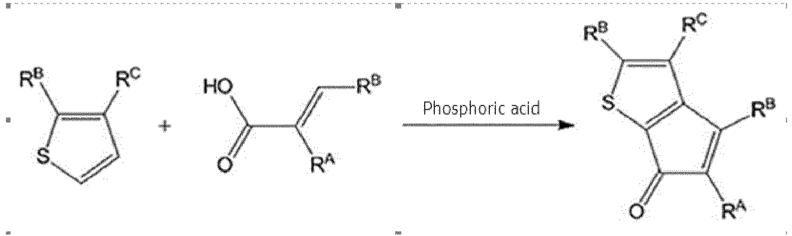

Meanwhile, various known methods may be used to synthesize the transition metal compound represented by Formula 1 above from the precursor compound represented by Formula 4 above obtained through the above method. The compound may be prepared through a method in which about 2 equivalents of alkyl lithium is added to the precursor compound represented by Formula 4 above to induce a deprotonation reaction so as to prepare a dilithium compound of cyclopentadienyl anion and amide anion, and then (Q¹) (Q²)MCl₂ is added to remove about 2 equivalents of LiCl.

In addition, the compound represented by Formula 2 above may be subjected to a reaction with a M(NMe₂)₄ compound to remove about 2 equivalents of HNMe₂ so as to obtain a transition metal compound represented by Formula 1 in which Q¹ and Q² are both NMe₂, and then the transition metal compound may be subjected to a reaction with Me₃SiCl or Me₂SiCl₂ to change a NMe₂ ligand into a chlorine ligand.

The catalyst according to the present invention includes a cocatalyst together with the transition metal compound represented by Formula 1 above. The cocatalyst is a compound represented by Formula 2 or Formula 3 above, which serves to activate the transition metal compound, and activates the main catalyst compound represented by Formula 1 above.

According to the present invention, in the cocatalyst compound represented by Formula 2 above, it is preferable that the [L-H]⁺ is a dimethylanilinium cation, and the [Z(A)₄]⁻ is [B(C₆F₅)₄]⁻. In addition, in the cocatalyst compound represented by Formula 3 above, it is preferable that the [L]⁺ is [(C₆H₅)₃C]⁺, and the [Z(A)₄]⁻ is [B(C₆F₅)₄].

In this case, the cocatalyst compound represented by Formula 2 above is not particularly limited, but is preferably at least one selected from the group consisting of trimethylammonium tetrakis(pentafluorophenyl)borate, triethylammonium tetrakis(pentafluorophenyl)borate, tripropylammonium tetrakis(pentafluorophenyl)borate, tri(n-butyl)ammonium tetrakis(pentafluorophenyl)borate, tri(sec-butyl)ammonium tetrakis(pentafluorophenyl)borate, N,N-dimethylanilinium tetrakis(pentafluorophenyl)borate, N,N-dimethylanilinium n-butyltris(pentafluorophenyl)borate, N,N-dimethylanilinium benzyltris(pentafluorophenyl)borate, N,N-dimethylanilinium tetrakis(4-(t-butyldimethylsiiyl)-2,3,5 6-tetrafluorophenyl) borate, N,N-dimethylanilinium tetrakis(4-(triisopropysilyl)-2,3,5,6-tetrafluorophenyl)borate, N,N-dimethylanilinium pentafluorophenoxytris(pentafluorphenyl)borate, (N,N-diethylanilinium tetrakis(pentafluorphenyl)borate, N,N-dimethyl-2,4,6-trimethylanilinium tetrakis(pentafluorophenyl)borate, N,N-dimethylammonium tetrakis(2,3,5,6-tetrafluorophenyl)borate, N,N-diethylammonium tetrakis(2,3,4,6-tetrafluorophenyl)borate, tripropylammonium tetrakis(2,3,4,6-tetrafluorophenyl)borate, tri(n-butyl)ammonium tetrakis(2,3,4,6-tetrafluorophenyl)borate, dimethyl(t-butyl)ammonium tetrakis(2,3,4,6-tetrafluorophenyl)borate, N,N-dimethylanilinium tetrakis(2,3,4,6-tetrafluorophenyl)borate, N,N-diethylanilinium tetrakis(2,3,4,6-tetrafluorophenyl)borate, N,N-dimethyl-2,4,6-trimethylanilinium tetrakis(2,3,4,6-tetrafluorophenyl)borate, and dialkylammonium, as non-limiting examples.

The dialkyl ammonium may be di-(i-propyl)ammonium tetrakis(pentafluorophenyl)borate, dicyclohexylammonium tetrakis(pentafluorophenyl)borate, or the like, as non-limiting examples.

In addition, the cocatalyst compound represented by Formula 3 above is not particularly limited, but is preferably at least one selected from the group consisting of trialkylphosphonium, dialkyloxonium, dialkylsulfonium, and carbonium salts, as non-limiting examples.

The trialkylphosphonium may be triphenylphosphonium tetrakis(pentafluorophenyl)borate, tri(o-toly)lphosphonium tetrakis(pentafluorophenyl)borate, tri(2,6-dimethylphenyl)phosphonium tetrakis(pentafluorophenyl)borate, or the like, as non-limiting examples.

The dialkyloxonium may be diphenyloxonium tetrakis(pentafluorophenyl)borate, di(o-tolyl)oxonium tetrakis(pentafluorophenyl)borate, di(2,6-dimethylphenyl)oxonium tetrakis(pentafluorophenyl)borate, and the like, as non-limiting examples.

The dialkylsulfonium may be diphenylsulfonium tetrakis(pentafluorophenyl)borate, di(o-tolyl)sulfonium tetrakis(pentafluorophenyl)borate, bis(2,6-dimethylphenyl)sulfonium tetrakis(pentafluorophenyl)borate, and the like, as non-limiting examples.

The carbonium salts may be tropylium tetrakis(pentafluorophenyl)borate, triphenylmethylcarbenium tetrakis(pentafluorophenyl)borate, benzene(diazonium) tetrakis(pentafluorophenyl)borate, and the like, as non-limiting examples.

These cocatalyst compounds may further include trialkylaluminum, such as trimethylaluminum, triethylaluminum, tributylaluminum, trihexylaluminum, trioctylaluminum, and tridecylaluminum.

Meanwhile, an amount of the cocatalyst compound to be added may be determined by considering an amount of the main catalyst compound to be added and an amount required to sufficiently activate the main catalyst compound. According to the present invention, the cocatalyst compound may be included in a molar ratio of 1:1 to 100,000, preferably 1:1 to 10,000, more preferably 1:1 to 5,000 with respect to the main catalyst compound. More specifically, the cocatalyst compound represented by Formula 2 or Formula 3 above may be included in a molar ratio of 1:1 to 100, preferably 1:1 to 10, more preferably 1:1 to 4 with respect to a transition metal compound as a main catalyst compound, for example, the main catalyst compound represented by Formula 1 above.

Meanwhile, the catalyst according to the present invention including the main catalyst compound and the cocatalyst compound may further include a carrier.

In this case, as the carrier, any carrier formed of inorganic or organic materials used in the preparation of a catalyst in the art to which the present invention pertains may be used without limitation.

According to an embodiment of the present invention, the carrier may be SiO₂, Al₂O₃, MgO, MgCl₂, CaCl₂, ZrO₂, TiO₂, B₂O₃, CaO, ZnO, BaO, ThO₂, SiO₂-Al₂O₃, SiO₂-MgO, SiO₂-TiO₂, SiO₂-V₂O₅, SiO₂-Cr₂O₃, SiO₂-TiO₂-MgO, bauxite, zeolite, starch, cyclodextrine, or a synthetic polymer.

Preferably, the carrier, which contains a hydroxy group on a surface thereof, may be at least one selected from the group consisting of silica (SiO₂), silica-alumina (SiO₂-Al₂O₃), and silica-magnesia (SiO₂-MgO).

As a method of supporting a catalyst including the main catalyst compound and the cocatalyst compound on the carrier, a method of directly supporting the main catalyst compound on a dehydrated carrier; a method of pre-treating the carrier with the cocatalyst compound and then supporting the main catalyst compound; a method of supporting the main catalyst compound on the carrier and then post-treating the supported main catalyst compound with the cocatalyst compound; a method of subjecting the main catalyst compound to a reaction with the cocatalyst compound and then adding the carrier to subject the mixture to a reaction, and the like may be used.

A solvent that may be used in the supporting method may be an aliphatic hydrocarbon-based solvent, an aromatic hydrocarbon-based solvent, a halogenated aliphatic hydrocarbon-based solvent, or a mixture thereof.

The aliphatic hydrocarbon-based solvent may be pentane, hexane, heptane, octane, nonane, decane, undecane, dodecane, or the like, as non-limiting examples.

The aromatic hydrocarbon-based solvent may be benzene, monochlorobenzene, dichlorobenzene, trichlorobenzene, toluene, or the like, as non-limiting examples.

The halogenated aliphatic hydrocarbon-based solvent may be dichloromethane, trichloromethane, dichloroethane, trichloroethane, or the like, as non-limiting examples.

In addition, it is desirable in terms of efficiency of the supporting process that the supporting method is performed at a temperature within a range of -70 to 200°C, preferably -50 to 150°C, and more preferably 0 to 100°C.

The ethylene alpha-olefin copolymer according to the present invention is prepared through copolymerization of ethylene and alpha-olefin, and the alpha-olefin may be an aliphatic olefin of C₃-C₁₂ or C₃-C₈. More specifically, the alpha-olefin may be propylene, 1-butene, 1-pentene, 3-methyl-1-butene, 1-hexene, 4-methyl-1-pentene, 3-methyl-1-pentene, 1-heptene, 1-octene, 1-decene, 1-undecene, 1-dodecene, 1-tetradecene, 1-hexadecene, 1-eicosene, 4,4-dimethyl-1-pentene, 4,4-diethyl-1-hexene, 3,4-dimethyl-1-hexene, or the like, and any one thereof or a mixture of two or more thereof may be used.

A ratio of ethylene and alpha-olefin added into a reactor during polymerization is not particularly limited, but preferably, ethylene and alpha-olefin are added at a weight ratio of 1:0.5 to 1:1.3. When ethylene and alpha-olefin are added in the above-described weight ratio, an olefin copolymer having a high molecular weight and a high comonomer content may be obtained.

Meanwhile, the polymerization reaction of ethylene and alpha-olefin in the present invention may be performed in a slurry phase, a solution phase, a gas phase, or a bulk phase.

When the polymerization reaction is performed in a liquid phase or a slurry phase, a solvent or ethylene or alpha-olefin monomer itself may be used as a medium.

Solvents that may be used during the polymerization reaction may be aliphatic hydrocarbon-based solvents, aromatic hydrocarbon-based solvents, halogenated aliphatic hydrocarbon-based solvents, or mixtures thereof

The aliphatic hydrocarbon-based solvent may be butane, isobutane, pentane, hexane, heptane, octane, nonane, decane, undecane, dodecane, cyclopentane, methylcyclopentane, cyclohexane, and the like, as non-limiting examples.

The aromatic hydrocarbon-based solvent may be benzene, monochlorobenzene, dichlorobenzene, trichlorobenzene, toluene, xylene, chlorobenzene, or the like, as non-limiting examples.

The halogenated aliphatic hydrocarbon solvent may be dichloromethane, trichloromethane, chloroethane, dichloroethane, trichloroethane, 1,2-dichloroethane, or the like, as non-limiting examples.

Meanwhile, in the polymerization reaction of the present invention, an amount of the catalyst added may be determined within a range in which the polymerization reaction of monomers may sufficiently occur in a slurry phase, liquid phase, gas phase, or bulk process, and therefore is not particularly limited.

However, according to the present invention, the amount of the catalyst added may be 10⁻⁸ to 1 mol/L, preferably 10⁻⁷ to 10⁻¹ mol/L, and more preferably 10⁻⁷ to 10⁻² mol/L, with respect to a concentration of the central metal (M) in the main catalyst compound per unit volume (L) of the monomers.

In addition, the polymerization reaction of the present invention may be a batch type, semi-continuous type, or continuous type reaction, and may preferably be a continuous reaction.

The temperature condition for the polymerization reaction of the present invention may be determined in consideration of the efficiency of the polymerization reaction depending on the type of reaction and the type of reactor to be applied, but the polymerization temperature may be 120°C or greater, preferably 150 to 200°C. An increase in polymerization temperature in the polymerization process induces an increase in reactivity, and accordingly, the catalyst for ethylene alpha-olefin copolymer polymerization is polymerizable at a high temperature of 150°C or greater.

The pressure condition for the polymerization reaction of the present invention may be determined in consideration of the efficiency of the polymerization reaction depending on the type of reaction and the type of reactor to be applied, but the polymerization pressure may be 1 to 100 atm, preferably 5 to 50 atm.

For the polymerization reaction of the present invention, a catalyst and a reactant may be continuously added, and the reactant may be a solvent, ethylene, an alpha-olefin monomer, or a mixture thereof.

Meanwhile, in the polymerization reaction of the present invention, a scavenger may be additionally added to remove moisture and impurities in a solution containing a catalyst so as to further enhance the effect of forming catalyst active species in a polymerization reactor.

The scavenger is not particularly limited, but may be at least one selected from the group consisting of compounds represented by Formula 8 below.

[Formula 8] D(R³¹)₃

In Formula 8 above, D is aluminum or boron, and R³¹ is each independently a halogen radical, a (C₁-C₂₀) hydrocarbyl radical, or a (C₁-C₂ₒ) hydrocarbyl radical substituted with a halogen.

The compounds represented by Formula 8 above are not particularly limited, but may be trialkylaluminum such as trimethylaluminum, triethylaluminum, tributylaluminum, triisobutylaluminum, trihexylaluminum, trioctylaluminum, and tridecylaluminum; dialkylaluminum alkoxides such as dimethylaluminum methoxide, diethylaluminum methoxide, and dibutylaluminum methoxide; dialkylaluminum halide, such as dimethylaluminum chloride, diethylaluminum chloride, and dibutylaluminum chloride; alkylaluminum dialkoxide, such as methylaluminum dimethoxide, ethylaluminum dimethoxide, and butylaluminum dimethoxide; alkylaluminum dihalide, such as methylaluminum dichloride, ethylaluminum dichloride, and butylaluminum dichloride; trialkylboron such as trimethylboron, triethylboron, triisobutylboron, tripropylboron, and tributylboron; or tris pentafluorophenyl boron, as non-limiting examples.

An amount of the scavenger used may be determined by the amount and activity of the main catalyst compound represented by Formula 1 above.

In addition, when a compound in which D is boron is used in the compounds represented by Formula 8, the compound may be used in a molar ratio of 1:1 to 1:100, preferably 1:1 to 1:10, and more preferably 1:1 to 1:3, with respect to the main catalyst compound.

When a compound in which D is aluminum is used in the compounds represented by Formula 8, the compound may be used in a molar ratio of 1:1 to 1:1,000, preferably 1:1 to 1:500, and more preferably 1:1 to 1:100, with respect to the main catalyst compound.

Meanwhile, a position in which the scavenger is added in a polymerization reactor is not particularly limited. For example, the scavenger may be added together with a catalyst and a reactant, or may be added into a first polymerization reactor or a second polymerization reactor in a separate line from a line into which the catalyst and the reactant are added.

### <Ethylene alpha-olefin copolymer>

The present invention provides an ethylene alpha-olefin copolymer prepared through the method for preparing a catalyst for polymerizing an ethylene alpha-olefin copolymer and an ethylene alpha-olefin copolymer.

In the ethylene alpha-olefin copolymer according to the present invention, a stress-strain curve measured by ASTM D638 includes at least two sections in which a slope of a tangent line changes at a strain of 0 to 1000%, and specifically, the sections in which the slope of the tangent line changes include a first section in which the slope of the tangent line decreases and a second section in which the slope of the tangent line increases. The first section may be observed at a strain of 0 to 200%, and the second section may be observed at a strain of 500 to 1000%.

The ethylene alpha-olefin copolymer according to the present invention may have a yield point in the first section. When a stress value reaches a certain value exceeding an elastic limit due to an increase in the external force acting on an object, permanent deformation begins to increase rapidly even though the external force hardly increases, and the certain value exceeding the elastic limit indicates a yield point, which may be observed in the first section described above.

The ethylene alpha-olefin copolymer according to the present invention may have a density of 0.857 to 0.910 g/cm³. Specifically, the ethylene alpha-olefin copolymer according to the present invention may have a density of 0.860 g/cm³ or greater or 0.865 g/cm³ or greater, and may have a density of 0.900 g/cm³ or less or 0.870 g/cm³ or less.

The ethylene alpha-olefin copolymer according to the present invention may have an elongation of 900% or greater. Specifically, the ethylene alpha-olefin copolymer according to the present invention may have an elongation of 1,000 % or greater. An elongation upper limit of the ethylene alpha-olefin copolymer may be 2,000%, for example, but is not limited thereto, and may be practically difficult to measure, considering measurement conditions, equipment, and the like.

The ethylene alpha-olefin copolymer according to the present invention may exhibit a melt index (MI) of 0.1 to 40 g/10 min. Specifically, the ethylene alpha-olefin copolymer according to the present invention may exhibit a melt index (MI) of 4.8 to 5.1 g/10 min.

The ethylene alpha-olefin copolymer according to the present invention may have a spreading gradient value of 1 to 5 (X 10⁶ Pa/m). Specifically, the ethylene alpha-olefin copolymer according to the present invention may have a spreading gradient value of 1.2 to 2.1 (X 10⁶ Pa/m). The spreading gradient value may be an average slope within a strain hardening section in which permanent elongation occurs in the stress-strain curve measured by ASTM D 638, and may be an average slope between a minimum point and a second maximum point. In this case, an upper limit of the measurement range of the second maximum point may be a point where the strain is 1,000%.

The ethylene alpha-olefin copolymer according to the present invention may have a molecular weight distribution (MWD) value of 1 to 10. Specifically, the ethylene alpha-olefin copolymer according to the present invention may have a molecular weight distribution (MWD) value of 1.5 or greater, 2.1 or greater, 2.2 or greater, 2.3 or greater, or 2.4 or greater, and may have a molecular weight distribution (MWD) value of 8 or less or 6 or less. The molecular weight distribution (MWD) value may be calculated as a ratio of a weight average molecular weight to a number average molecular weight (Mw/Mn).

### MODE FOR CARRYING OUT THE INVENTION

### Examples and Comparative Examples

### <Synthesis Example> Synthesis of Main Catalyst Compound (2)

A transition metal compound (2) was synthesized according to the following Reaction Formula 2. A specific synthesis process is as follows.

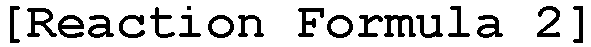

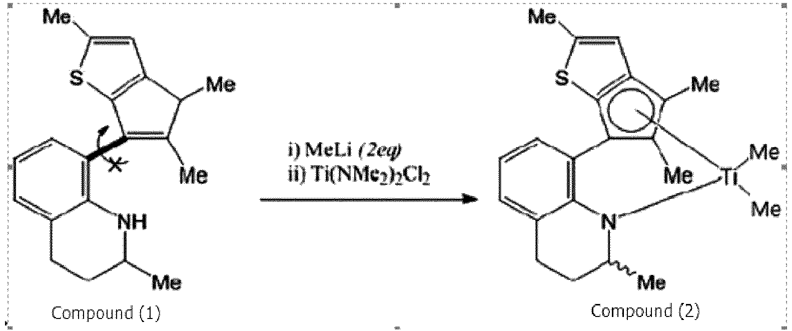

First, 1.63 g (3.55 mmol, 1.6 M diethyl ether solution) of methyllithium was added dropwise to 10 mL of a diethyl ether solution in which 0.58 g (1.79 mmol) of a compound (1) was dissolved at -30°C (step (i)).

The solution obtained in step (i) was stirred at room temperature overnight, the temperature was lowered to -30°C, and then, 0.37 g (1.79 mmol) of Ti(NMe₂)₂Cl₂ was added at once (step (ii)).

The solution obtained in step (ii) was stirred for 3 hours and then the solvent was completely removed using a vacuum pump Consequently, a red solid compound (2) was obtained (0.59 g, yield: 75%).

It was confirmed through ¹H NMR spectrum that two steric compounds were present in a ratio of 1:0.8.

¹H NMR (C₆D₆): d 7.12 and 7.09 (d, J = 7.2 Hz, 1H), 6.96 and 6.94 (d, J = 7.2 Hz, 1H), 6.82 and 6.80 (t, J = 7.2Hz,1H),6.47 and 6.46(d, J =7.2Hz,1H), 6.45 and 6.44(d, J = 7.2Hz, 1H), 5.44(m, 1H, NCH),2.76-2.60(m, 1H, CH₂), 2.44-2.18 (m, 1H, CH₂), 2.28 and 2.22 (s, 3H), 2.09 (s, 3H), 1.74 and 1.65 (s, 3H), 1.88-1.48 (m, 2H, CH2), 1.20 and 1.18 (d, J = 7.2 Hz, 3H), 0.77 and 0.71 (s, 3H, TiMe), 0.49 and 0.40 (s, 3H, TiMe) ppm.

¹³C{1H} NMR (C₆D₆): d 159.83, 159.52, 145.93, 144.90, 140.78, 139.93, 139.21, 138.86, 135.26, 131.56, 129.69, 129.57, 127.50, 127.46, 127.38, 127.24, 121.29, 121.16, 120.05, 119.96, 118.90, 118.74, 117.99, 117.74, 113.87, 110.38, 57.91, 55.31, 54.87, 51.68, 50.27, 50.12, 34.77, 27.58, 27.27, 23.10, 22.05, 20.31, 19.90, 16.66, 14.70, 13.11, 12.98, 12.68 ppm. Anal. Calc. (C₂₂H₂₇NSTi): C, 68.56; H, 7.06; N, 3.63. Found: C, 68.43; H, 7.24; N, 3.52%.

### <Example 1>

The following continuous polymerization process was performed using a reactor equipped with a 2.5 L stirrer to prepare an ethylene/1-octene copolymer.

8.5 kg/hr of n-hexane, 1.5 kg/hr of ethylene, and 0.7 kg/hr of 1-butene as solvents were passed through a first heat exchanger and injected into a high-pressure mixer to prepare a first mixture, and the prepared first mixture was passed through a second heat exchanger and then injected into the bottom of a polymerization reactor. 0.114 mmol/hr of the transition metal compound obtained in the synthesis example and 0.3 mmol/hr of N,N-dimethylanilinium tetrakis(pentafluorophenyl)borate as a cocatalyst were injected into the bottom of the reactor. In addition, triisobutyl aluminum as a scavenger was injected through a separate line from a line into which the first mixture was injected. The triisobutyl aluminum was injected in an amount of 23 mmol/hr. Accordingly, reaction was performed at a polymerization pressure set to 90 bar, and the bottom temperature of the polymerizer was 135°C, and the top temperature rose to 150°C due to polymerization reaction heat. It was performed as a continuous reaction, and an estimated polymerization time from catalyst injection to reaction completion and discharge was about 10 minutes. After passing through the polymerizer, the obtained reactant was passed through a high temperature and high pressure primary recovery device to recover the solvent, and then passed through a high temperature and low pressure secondary recovery device to recover residual n-hexane and unreacted ethylene. Thereafter, a pellet molding machine was used to obtain an ethylene/1-octene copolymer in a solidified form.

### <Example 2>

The following continuous polymerization process was performed using a reactor equipped with a 2.5 L stirrer to prepare an ethylene/1-octene copolymer.

An ethylene/1-octene copolymer was obtained through the same experiment as in Example 1, except that the solvent was changed to 8.5 kg/hr of n-hexane, 1.3 kg/hr of ethylene, and 0.9 kg/hr of 1-butene.

### <Comparative Examples 1 to 4>

Products from LG Chem (product name: LC565), Mitsui Chemicals (product name: DF640), and two products from Dow Chemical (product name: EG7447, EG8200) were each applied as copolymers of Comparative Examples 1 to 4.

### Analysis of physical properties of ethylene alpha-olefin copolymers

Ethylene alpha-olefin copolymer samples of Examples and Comparative Examples were placed in a mold having a thickness of 3 mm and a width and length of 8 cm, and pressed and melted at 125°C for 7 minutes using a press molding machine, and then cooled for 5 minutes to prepare specimens, and physical properties of the specimens were measured and are shown in Table 1 below.
(1) Melt index (MI): A melt index was measured with an apparatus (manufacturer: Mirage, model name: SD-120L) by applying a method of ASTM D-1238 (condition E, 190°C, 2.16 kg load).
(2) Density (g/mL): A copolymer treated with an antioxidant was prepared into a specimen having a thickness of 3 mm and a radius of 2 cm using a compression mold at 180°C, cooled to room temperature, and measured using ASTM D-792. (Manufacturer: Toyoseiki, Model name: T-001)
(3) Molecular weight distribution (MWD): A molecular weight distribution was measured at 160°C using a 1,2,4-trichlorobenzene solvent through a gel permeation chromatography (GPC) (apparatus name: PL-GPC220, manufacturer: Agilent) analysis method.
(4) Spreading gradient: A spreading gradient was measured at a speed of 200 mm/min using a Z010 Universal Testing Machine from Zwick, and a spreading gradient value was obtained through the method described above, and an average value of a total of 5 tests was shown as a result.
(5) Stress-strain curve analysis: For the specimen, the number of sections in which a slope of a tangent line changed at a strain of 0 to 1000% of a stress curve versus a longitudinal strain measured by ASTM D638 was determined and the results were shown.
(6) Elongation: After cutting the specimen into a shape for measuring tensile strength according to ASTM D638 standard, a strain until the specimen breaks was measured at a tensile speed of 5 mm/min according to ASTM D638.

**[Table 1]**

| | MI (g/10 min) | Density (g/cc) | MWD | Spreading gradient (X 10⁶ Pa/m) | No. of sections having changes in tangent slope | Elongation (%) |
|---|---|---|---|---|---|---|
| Example 1 | 5.1 | 0.865 | 2.4 | 1.2 | 2 | 1000 or greater |
| Example 2 | 4.8 | 0.870 | 2.4 | 2.1 | 2 | 1000 or greater |
| Comparative Example 1 | 5.0 | 0.865 | 2.3 | 1.3 | 1 | 850 |
| Comparative Example 2 | 5.1 | 0.865 | 2.2 | 1.5 | 1 | 700 |
| Comparative Example 3 | 4.3 | 0.864 | 2.1 | 1.5 | 1 | 600 |
| Comparative Example 4 | 4.9 | 0.870 | 2.1 | 1.6 | 1 | 510 |

Referring to Table 1 and FIGS. 1 and 2, Examples 1 and 2 having at least two sections in which a slope of a tangent line changed in a graph of stress versus strain curve during the stress-strain curve analysis (specifically, both a first section in which a slope of a tangent line decreases and a second section in which a slope of a tangent line increases were observed) showed an elongation of 1000% or greater, with no breakage occurring at a strain of 1000%, whereas Comparative Examples 1 to 4 having only one section in which a slope of a tangent line changed (specifically, only a first section in which a slope of a tangent line decreases was observed) showed an elongation of less than 1000%, with breakage occurring at a strain of less than 1000%.

In this regard, it is determined that the ethylene alpha-olefin copolymers of Examples 1 and 2 having at least two sections in which the slope of the tangent line changed in the graph of stress versus strain curve during the stress-strain curve analysis have relatively excellent tensile elongation, flexural strength, processability, and the like.

### INDUSTRIAL APPLICABILITY

As described above, the characteristics of the present invention may be applied, either entirely or partially, to ethylene alpha-olefin copolymers and a method for preparing the same.

## Claims

1. An ethylene alpha-olefin copolymer comprising an ethylene structural unit and an alpha-olefin structural unit,
wherein a stress-strain curve measured by ASTM D638 comprises at least two sections in which a slope of a tangent line changes, and
the sections in which the slope of the tangent line changes comprise a first section in which the slope of the tangent line decreases and a second section in which the slope of the tangent line increases.

2. The ethylene alpha-olefin copolymer of claim 1, wherein the first section is observed at a strain of 0 to 200%, and
the second section is observed at a strain of 500 to 1000%.

3. The ethylene alpha-olefin copolymer of claim 1, wherein a yield point is present in the first section.

4. The ethylene alpha-olefin copolymer of claim 1, having an elongation of 900% or greater.

5. The ethylene alpha-olefin copolymer of claim 1, having a spreading gradient value of 1 to 5 (X 10⁶ Pa/m).
